(19) **Europäisches Patentamt**
**European Patent Office**
**Office européen des brevets**

(11) **EP 2 280 048 B1**

(12) **EUROPEAN PATENT SPECIFICATION**

(45) Date of publication and mention
of the grant of the patent:
**01.05.2019 Bulletin 2019/18**

(51) Int Cl.:
***C09J 7/38*** *(2018.01)*     ***C08G 18/79*** *(2006.01)*
***C08G 18/42*** *(2006.01)*     ***C09J 167/02*** *(2006.01)*
***C09J 167/06*** *(2006.01)*     ***C09J 175/06*** *(2006.01)*

(21) Application number: **09750634.9**

(22) Date of filing: **21.05.2009**

(86) International application number:
**PCT/JP2009/059375**

(87) International publication number:
**WO 2009/142272 (26.11.2009 Gazette 2009/48)**

(54) **POLYESTER-BASED MASKING SHEET**

ABDECKFOLIE AUF POLYESTERBASIS

FEUILLE DE MASQUAGE À BASE DE POLYESTER

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **21.05.2008 JP 2008133679**

(43) Date of publication of application:
**02.02.2011 Bulletin 2011/05**

(73) Proprietor: **Nitto Denko Corporation
Ibaraki-shi
Osaka 567-8680 (JP)**

(72) Inventors:
• **SATOMI, Yoshie
Osaka 567-8680 (JP)**
• **HITOSHI, Takahira
Osaka 567-8680 (JP)**

(74) Representative: **Grünecker Patent- und
Rechtsanwälte
PartG mbB
Leopoldstraße 4
80802 München (DE)**

(56) References cited:
**EP-A2- 0 741 178          JP-A- 62 050 378
JP-A- 63 132 986          JP-A- 2007 191 656
JP-A- 2007 308 626          JP-A- 2007 320 976
JP-A- 2008 013 593**

• **"I'M GREEN TM POLYETHYLENE INNOVATION
AND DIFFERENTIATION FOR YOUR
PRODUCT", , 1 May 2014 (2014-05-01), pages 1-6,
XP055130718, Retrieved from the Internet:
URL:http://www.braskem.com.br/catalogo2014
junho12/ [retrieved on 2014-07-22]**
• **Ulrich Jahn: "Decandisäure", Römpp online 4.0,
15 June 2000 (2000-06-15), pages 1-2,
XP055421312, Retrieved from the Internet:
URL:https://roempp.thieme.de/roempp4.0/do/
data/RD-04-00263 [retrieved on 2017-11-02]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a polyester-based masking sheet as defined in claim 1 having a pressure-sensitive adhesive layer on a substrate. More specifically, the present invention relates to a polyester-based masking sheet in which a polyester resin including an earth-friendly plant-derived material as the raw material component thereof is used as the active ingredient of the pressure-sensitive adhesive layer.

BACKGROUND ART

A masking sheet after use by attaching it to an adherend is peeled and discarded. In this kind of masking sheet, an acrylic material that is a petroleum-derived material has been heretofore mainly used as the active ingredient of the pressure-sensitive adhesive layer (Patent Document 1).

BACKGROUND ART DOCUMENT

PATENT DOCUMENT

Patent Document 1: JP-A-10-158596
JP 2007 320976 A discloses an adhesive sheet comprising a substrate like a PET film; and a pressure-sensitive adhesive layer provided on said substrate, which contains a polyester resin obtained by condensation reaction of plant-derived dicarboxylic acid like adipic acid, azelaic acid etc. with a plant derived diol, wherein the ratio of hydroxyl groups in the diol to carboxyl groups in the dicarboxylic acid is close to 1.00.
JP 2008 013593 A describes a polyester-based adhesive sheet that comprises a layer obtained by the cross-linking treatment of a polyester-based adhesive composition obtained by the polycondensation of diol and a dicarboxylic acid which are of vegetable origin, and having a gel fraction of 30 to 80 wt%. The polyester-based adhesive composition is subject to reaction in a ratio of 9.5 or more molar equivalent of the dicarboxylic acid to 10 molar equivalent of the diol.

SUMMARY OF THE INVENTION

The above-described conventional masking sheet is threatened by oil depletion because of a petroleum-derived material and also, discharges carbon dioxide in disposal after use. That is, in the light of oil depletion or carbon dioxide discharge in industrial waste disposal, consideration for global environment is lacking.
In recent years, environmental consciousness is demanded as a measure against depletion of fossil resources or global warming, and use of a plant-derived material that is a renewable material is beginning to be recommended.
Under these circumstances, an object of the present invention is to provide a biomass masking sheet which uses no fossil resource (including oil resources) as the active ingredient of the pressure-sensitive adhesive layer but uses an earth-friendly plant-derived material free from a problem of depletion of fossil resources or carbon dioxide discharge, and another object of the present invention is to provide a high-performance biomass masking sheet capable of reducing the load at high-speed unwinding while maintaining the pressure-sensitive adhesive force to an adherend and the own back surface and capable of being peeled without leaving of adhesive residue or contamination even when used at high temperatures.
The present inventors have made intensive studies to attain the above-described objects, as a result, it has been found that when a pressure-sensitive adhesive layer where a polyester resin including, as the raw material component thereof, a plant-derived material under no threat of depletion of fossil resources is employed for the active ingredient and a tackifier is incorporated thereinto and where the gel fraction is set to an adequate range by a crosslinking treatment using a crosslinking agent, is provided on a substrate, an earth-friendly high-performance biomass masking sheet capable of reducing the load at high-speed unwinding while maintaining the pressure-sensitive adhesive force to an adherend and the own back surface and capable of being peeled without leaving of adhesive residue or contamination even when used at high temperatures, which ensures that thanks to the plant-derived material, the peeled waste is free of a problem of carbon dioxide discharge, can be obtained. The present invention has been accomplished based on this finding.
The present invention provides:

    (1) A polyester-based masking sheet comprising:

        a substrate; and

a pressure-sensitive adhesive layer provided on said substrate, which contains a polyester resin obtained by condensation-polymerizing a plant-derived dicarboxylic acid with a plant-derived diol in a ratio such that a content of hydroxyl group in the diol is from 1.01 to 1.40 mol per 1.00 mol of carboxyl group contained in the dicarboxylic acid, and a tackifier in an amount of from 10 to 50 parts by weight per 100 parts by weight of said polyester resin, and is crosslinked by a crosslinking agent to have a gel fraction of 40 to 90%,

wherein the plant-derived dicarboxylic acid is a dimer acid formed from castor oil-derived oleic acid and the plant-derived diol is a dimer diol formed from a castor oil-derived aliphatic ester or oleic acid, and

in the condensation-polymerization, a non-plant-derived diol is also used as a monomer component together with the plant-derived dicarboxylic acid and the plant-derived diol, and the non-plant-derived diol has a ratio of 5 wt% or less, based on the entire raw material component.

(2) The polyester-based masking sheet according to item (1), wherein the tackifier includes a plant-derived material as a main component thereof.

(3) The polyester-based masking sheet according to item (1) or (2), wherein the tackifier is at least one selected from a rosin-based resin and a terpene-based resin.

(4) The polyester-based masking sheet according to any one of items (1) to (3), wherein the crosslinking agent is a polyisocyanate compound.

(5) The polyester-based masking sheet according to any one of items (1) to (4), wherein the crosslinking agent is contained in an amount of from 2 to 13 parts by weight per 100 parts by weight of the polyester resin.

(6) The polyester-based masking sheet according to any one of items (1) to (5), wherein the substrate is a porous substrate.

In this way, in the present invention, a pressure-sensitive adhesive layer in which a polyester resin including a plant-derived material as the raw material component thereof is used for the active ingredient and a tackifier is added thereto and which is crosslinked by a crosslinking agent to have a gel fraction in a specific range, is provided on a substrate, so that an earth-friendly biomass masking sheet unthreatened by depletion of fossil resources and thanks to use of a plant-derived material, capable of realizing carbon neutral, despite discharge of carbon dioxide at the disposal after use, can be provided. Also, this masking sheet as a high-performance masking sheet can reduce the load at high-speed unwinding while maintaining the pressure-sensitive adhesive force to an adherend and the own back surface and even when used at high temperatures, it can be peeled without leaving of adhesive residue or contamination.

Also, at the preparation of the pressure-sensitive adhesive using the above-described polyester resin for the active ingredient, an emulsion can be formed, for example, by D-phase emulsification [the resin above as an oil component is dispersed in a surfactant phase (D phase) containing water and a polyhydric alcohol to form an O/D type gel emulsion and water is added to this gel emulsion to form an O/W type emulsion], so that the polyester-based masking sheet can be also a measure against VOC (Volatile Organic Compounds) emission and can contribute to independence from an organic solvent.

MODE FOR CARRYING OUT THE INVENTION

The polyester resin for use in the present invention is obtained using, as the raw material component (monomer component), a plant-derived dicarboxylic acid and a plant-derived diol by condensation polymerizing these raw material components.

The condensation polymerization may be performed with use of an organic solvent by a conventional method or may be performed without a solvent under reduced pressure. The condensation polymerization reaction can be performed using an appropriate catalyst, for example, a metal compound such as tetra-n-butyl titanate, tetraisopropyl titanate, antimony trioxide and butyltin oxide.

The plant-derived dicarboxylic acid used in the invention is a dimer acid formed from castor oil-derived oleic acid.

The plant-derived diol used in the invention is a dimer diol formed from castor oil derived aliphatic ester or oleic acid. Also, two or more kinds of these diols may be used in combination.

Separately from the plant-derived dicarboxylic acid and the plant-derived diol, a non-plant-derived diol is used in combination. The ratio of such a non-plant-derived diol is 5 wt% or less, based on the entire raw material component.

In the condensation polymerization of the dicarboxylic acid and the diol, these monomers are reacted in a ratio such that the content of hydroxyl group in the diol becomes from 1.01 to 1.40 mol, preferably from 1.02 to 1.30 mol, per 1.00 mol of carboxyl group contained in the dicarboxylic acid.

If the ratio of hydroxyl group is less than 1.01 mol, the content of hydroxyl group at the molecular terminal of the polyester resin obtained by condensation polymerization becomes small, making it difficult to cause crosslinking by a crosslinking agent, whereby the gel fraction can be hardly adjusted to the adequate range. Also, if the ratio of hydroxyl group exceeds 1.40 mol, the molecular weight decreases and gelling is difficult to proceed through crosslinking by a crosslinking agent.

Usually, the polyester resin obtained by such condensation polymerization preferably has a weight average molecular weight (Mw) of 10,000 to 200,000.

In the present invention, the polyester resin above is used for the active ingredient of the pressure-sensitive adhesive, and a tackifier and further a crosslinking agent are blended therewith to prepare a pressure-sensitive adhesive.

The preparation of the pressure-sensitive adhesive may be performed using an organic solvent or may be performed under solventless conditions. Also, an emulsion-type pressure-sensitive adhesive obtained by emulsification and dispersion in water may be formed and for facilitating the emulsification and dispersion, emulsion formation by D-phase emulsification may be utilized.

In the D-phase emulsification, the resin above as an oil component is dispersed in a surfactant phase (D phase) containing water and a polyhydric alcohol to form an O/D type gel emulsion and water is added to this gel emulsion to form an O/W type emulsion. The tackifier and the crosslinking agent may be added together with the resin or may be blended after obtaining the emulsion. According to the D-phase emulsification, it is possible to take a measure against VOC emission and contribute to independence from an organic solvent.

Conventionally known tackifiers can be widely used, but a tackifier including a plant-derived material as a main component thereof is preferred. Examples of such a tackifier include a rosin-based resin and a terpene-based resin. One of these tackifiers may be used alone, or two or more thereof may be used in combination.

Examples of the rosin-based resin include rosin, polymerized rosin, hydrogenated rosin, rosin ester, polymerized rosin ester, hydrogenated rosin ester and rosin phenol resin. Also, examples of the terpene-based resin include terpene resin, terpene phenol resin and aromatic modified terpene resin.

The amount of the tackifier is from 10 to 50 parts by weight, preferably from 15 to 45 parts by weight, per 100 parts by weight of the polyester resin.

If the amount of the tackifier exceeds 50 parts by weight, the pressure-sensitive adhesive force becomes too high and a problem of adhesive residue or contamination is involved in the re-peeling after holding at high temperatures or the re-peeling becomes difficult. Also, if the amount of the tackifier is less than 10 parts by weight, the pressure-sensitive adhesive force to the own back surface is reduced and when wound into a roll, peeling-off or the like is disadvantageously liable to occur.

For the crosslinking agent, a polyfunctional compound capable of reacting with a functional group (e.g., carboxyl group, hydroxyl group) contained in the molecule of the polyester resin and thereby forming a crosslinked structure in the resin can be used.

As such a crosslinking agent, conventionally known crosslinking agents can be used. Examples thereof include a polyvalent isocyanurate, a polyfunctional isocyanate compound, a polyfunctional melamine compound, a polyfunctional epoxy compound, a polyfunctional oxazoline compound, a polyfunctional azilidine compound, and a metal chelate compound. Among these crosslinking agents, a polyvalent isocyanurate and a polyfunctional isocyanate compound are preferred because of their versatility.

As the polyvalent isocyanurate, a polyisocyanate form of hexamethylene diisocyanate may be mentioned. Examples thereof include, as commercial products, "Coronate HX", trade name (produced by Nippon Polyurethane Industry Co., Ltd.), "Coronate HK", trade name (produced by Nippon Polyurethane Industry Co., Ltd.), "Coronate 2096", trade name (produced by Nippon Polyurethane Industry Co., Ltd.), and "DURANATE TPA-100", trade name (produced by Asahi Kasei Chemicals Corporation).

The polyfunctional isocyanate compound needs to be a compound having at least three (trifunctional) or more isocyanates groups in the molecule but, if desired, compounds having two isocyanate groups (bifunctional) may be used in combination.

Specific examples thereof include aliphatic polyisocyanates, alicyclic polyisocyanates, aromatic polyisocyanates, and dimers or trimers thereof.

Examples of the aliphatic polyisocyanates include a tetramethylene diisocyanate such as 1,2-tetramethylene diisocyanate, 1,3-tetramethylene diisocyanate and 1,4-tetramethylene diisocyanate; a hexamethylene diisocyanate such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate and 2,5-hexamethylene diisocyanate; and others such as 1,2-ethylene diisocyanate, 2-methyl-1,5-pentane diisocyanate, 3-methyl-1,5-pentane diisocyanate and lysin diisocyanate.

Examples of the alicyclic polyisocyanates include a cyclopentyl diisocyanate such as 1,2-cyclopentyl diisocyanate and 1,3-cyclopentyl diisocyanate; a cyclohexyl diisocyanate such as 1,2-cyclohexyl diisocyanate, 1,3-cyclohexyl diisocyanate and 1,4-cyclohexyl diisocyanate; isophorone diisocyanate, norbornene diisocyanate, hydrogenated tolylene diisocyanate, hydrogenated xylylene diisocyanate, hydrogenated diphenylmethane diisocyanate, hydrogenated tetramethylxylene diisocyanate and 4,4'-dicyclohexylmethane diisocyanate.

Examples of the aromatic polyisocyanates include 2,4-tolylene diisocyanate, 2,6-tolylene diisocyanate, 1,4-xylylene diisocyanate, 1,3-xylylene diisocyanate, 4,4'-diphenylmethane diisocyanate, 2,4'-diphenylmethane diisocyanate, 2,2'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate.

Examples of the dimers or trimers of polyisocyanates include a dimer or trimer of diphenylmethane diisocyanate, a reaction product of trimethylolpropane and tolylene diisocyanate, a reaction product of trimethylolpropane and hexamethylene diisocyanate, and a polymer such as polymethylene polyphenyl isocyanate, polyether polyisocyanate and polyester polyisocyanate. As regards these compounds, a commercial product may also be used, and examples thereof include, as a trimer adduct of trimethylolpropane and tolylene diisocyanate, "Coronate L", trade name (produced by Nippon Polyurethane Industry Co., Ltd.), and as a trimer adduct of trimethylolpropane and hexamethylene diisocyanate, "coronate HL", trade name (produced by Nippon Polyurethane Industry Co., Ltd.).

Examples of the polyfunctional melamine compound include methylated methylolmelamine and butylated hexamethylolmelamine.

Examples of the polyfunctional epoxy compound include diglycidyl aniline and glycerin diglycidyl ether.

The amount of the crosslinking agent can be appropriately selected according to the kind of the crosslinking agent so that the gel fraction after crosslinking can fall in the specific range.

For example, the amount of the polyisocyanate compound is preferably from 2 to 13 parts by weight, more preferably from 2 to 12 parts by weight, per 100 parts by weight of the polyester resin (the total amount of dicarboxylic acid and diol as the raw material component). Thanks to such an amount used, an appropriate crosslinking bond is formed, as a result, excellent adhesive characteristics satisfying both the pressure-sensitive adhesive force and the holding property (cohesive force) can be obtained, and good results in terms of transparency and the like are likely to be yielded.

Incidentally, an appropriate catalyst can be used together with the crosslinking agent so as to efficiently obtain the gel fraction. For example, tetra-n-butyl titanate, tetraisopropyl titanate, butyltin oxide and dioctyltin dilaurate may be used.

In the present invention, the thus-prepared pressure-sensitive adhesive is coated on a substrate and dried at a temperature of usually from 60 to 120°C for a predetermined time according to the kind of the substrate, and crosslinked simultaneously with or after the drying to obtain a polyester-based masking sheet having, on the substrate, a crosslinked pressure-sensitive adhesive layer having a thickness of usually from 5 to 100 μm, preferably from 10 to 80 μm.

In this polyester-based masking sheet, the crosslinked pressure-sensitive adhesive layer has a gel fraction of 40 to 90%, preferably 60 to 80%.

If the gel fraction exceeds 90%, the crosslinking density is excessively high and the pressure-sensitive adhesive force decreases, making the fixing difficult, whereas if the gel fraction is less than 40%, fixing becomes difficult due to lack of cohesive force, or adhesive residue or contamination is readily generated.

Examples of the substrate used for providing the pressure-sensitive adhesive layer thereon include paper composed of a fibrous substance, such as kraft paper, crepe paper and Japanese paper, cloth composed of staple fiber calico or polyester, and plastic film composed of polystyrene or polypropylene.

Among these, a porous substrate is preferred in view of easy cuttability by hand (workability) and adhesion between the pressure-sensitive adhesive and the tape back surface when a pressure-sensitive adhesive is sprayed. The material which can work out to a porous substrate is preferably the above-described paper material composed of a fibrous substance, more preferably a porous thin paper material made from beaten wood pulp or its mixture with one or more of these synthetic short fibers, and Japanese paper composed of such a paper material is preferred, because this is excellent in the strength, elongation and the like.

Examples of the material for the synthetic short fiber include a polyvinyl alcohol (e.g., vinylon), a polyamide (e.g., nylon), a polyester, polyethylene, polypropylene, polyurethane, polyvinyl chloride, polyvinylidene chloride and polyacrylonitrile.

In particular, from the standpoint that the strength or elongation can be enhanced and appropriate rigidity can be imparted, a porous thin paper material where the synthetic short fiber mixed in the paper material is vinylon and its mixing ratio is 5% or more, preferably from 5 to 70%, more preferably from 15 to 50%, is suitably used. Above all, Japanese paper composed of such a porous thin paper material is most preferred as the substrate for use in the present invention.

The basis weight of the porous thin paper material is not particularly limited but is usually from 15 to 80 g/m$^2$, preferably from 25 to 50 g/m$^2$.

Also, as described, for example, in JP-A-2-151427, the substrate such as Japanese paper is impregnated with rubber and/or synthetic resin, whereby rupture or breakage at the separation can be prevented. Examples of the rubber or synthetic resin used here include butyl rubber, natural rubber, styrene, butadiene rubber and an acrylic acid ester copolymer.

In the polyester-based masking sheet of the present invention, the pressure-sensitive adhesive force to SUS plate at 23°C is from 1.5 to 8.0 N/20 mm, preferably from 2.0 to 7.0 N/20 mm. If this pressure-sensitive adhesive force is less than 1.5 N/20 mm, the pressure-sensitive adhesive force to an adherend is insufficient and the masking sheet may be peeled while in use, whereas if the pressure-sensitive adhesive force above exceeds 8.0 N/20 mm, leaving of adhesive residue or breakage of substrate may be generated at the separation due to excessively strong pressure-sensitive adhesive force. Incidentally, the pressure-sensitive adhesive force to SUS plate is defined by the measuring method described in Examples.

Also, in the polyester-based masking sheet of the present invention, the pressure-sensitive adhesive force between the pressure-sensitive adhesive layer and the own back surface, that is, the pressure-sensitive adhesive force to own back surface, at 23°C is 1.5 N/20 mm or more, preferably 2.0 N/20 mm or more. If the pressure-sensitive adhesive force to own back surface is less than 1.5 N/20 mm, the superposed lamination property becomes bad and a trouble such as peeling-off or slip-off is liable to occur. Incidentally, the pressure-sensitive adhesive force to own back surface is defined by the measuring method described in Examples.

Furthermore, in the polyester-based masking sheet of the present invention, the pressure-sensitive adhesive force to own back surface at high-speed separation, so-called unwinding force, at 23°C is from 1.0 to 8.0 N/20 mm, preferably from 2.0 to 7.0 N/20 mm.

If this unwinding force is less than 1.0 N/20 mm, a phenomenon that the tape is unwound to a length more than a predetermined length or is accidentally unwound under its own weight is liable to occur due to excessively small unwinding force, whereas if the unwinding force above exceeds 8.0 N/20 mm, the workability is bad due to excessively large unwinding force or a trouble such as breakage of tape at the unwinding is liable to occur. Incidentally, the pressure-sensitive adhesive force to own back surface at high-speed separation is defined by the measuring method described in Examples.

The polyester-based masking sheet of the present invention has a performance of undergoing no fall in the constant-load peeling test from own back surface (see, Examples) and allowing a slippage distance of only 60 mm or less. If the sheet undergoes a fall in the test above, this disadvantageously means that the unwinding force is too small and the workability is poor.

Also, the polyester-based masking sheet of the present invention has a performance of enabling separation without leaving of adhesive residue or contamination even when held at high temperature (for example, 130°C).

Thanks to these various performances, the polyester-based masking sheet of the present invention is useful as a masking tape, a cure tape, a protective film tape or the like used for masking at the automotive painting and in addition, can be advantageously used for various applications known as a masking sheet.

Since the pressure-sensitive adhesive layer is composed of a plant-derived material, the masking sheet peeled from an adherend after use for the purposes above can realize carbon neutral, despite carbon dioxide discharge at the disposal, and does not cause an adverse effect on the global environment.

EXAMPLES

The present invention is described in greater detail below by referring to Examples. In the following, "parts" means "parts by weight". Polyester Resins A to E used in Examples and Comparative Examples were produced by the following methods.

<Production of Polyester Resin A>

A three-neck separable flask was equipped with a stirrer, a thermometer and a vacuum pump, and 110.7 g of dimer acid ("Pripol 1009", trade name, produced by UNICHEMA, Mw: 567), 100 g of dimer diol ("Pripol 2033", trade name, produced by UNICHEMA, Mw: 537), and 0.532 g of titanium tetraisopropoxide (produced by Kishida Chemical Co., Ltd.) as the catalyst were charged thereinto. The temperature was raised to 200°C with stirring in an atmosphere of reduced pressure, and this temperature was kept. The reaction was continued for about 3 hours to obtain Polyester Resin A. The weight average molecular weight Mw thereof was 30,000. Incidentally, the dimer acid and the dimer diol were used in amounts of giving a ratio of 0.95 mol of hydroxyl group contained in the dimer diol per 1.00 mol of carboxyl group contained in the dimer acid.

<Production of Polyester Resin B>

Polyester Resin B was obtained in the same manner as Polyester Resin A except for changing the amount used of the dimer acid to 104.9 g while keeping the amount used of the dimer diol as 100 g. The weight average molecular weight Mw was 85,000. Incidentally, the dimer acid and the dimer diol were used in amounts of giving a ratio of 1.01 mol of hydroxyl group contained in the dimer diol per 1.00 mol of carboxyl group contained in the dimer acid.

<Production of Polyester Resin C>

Polyester Resin C was obtained in the same manner as Polyester Resin A except for changing the amount used of the dimer acid to 100.9 g while keeping the amount used of the dimer diol as 100 g. The weight average molecular weight Mw was 55,000. Incidentally, the dimer acid and the dimer diol were used in amounts of giving a ratio of 1.05 mol of hydroxyl group contained in the dimer diol per 1.00 mol of carboxyl group contained in the dimer acid.

<Production of Polyester Resin D>

Polyester Resin D was obtained in the same manner as Polyester Resin A except for changing the amount used of the dimer acid to 88.3 g while keeping the amount used of the dimer diol as 100 g. The weight average molecular weight Mw was 20,000. Incidentally, the dimer acid and the dimer diol were used in amounts of giving a ratio of 1.20 mol of hydroxyl group contained in the dimer diol per 1.00 mol of carboxyl group contained in the dimer acid.

<Production of Polyester Resin E>

Polyester Resin E was obtained in the same manner as Polyester Resin A except for changing the amount used of the dimer acid to 73.1 g while keeping the amount used of the dimer diol as 100 g. The weight average molecular weight Mw was 10,000. Incidentally, the dimer acid and the dimer diol were used in amounts of giving a ratio of 1.45 mol of hydroxyl group contained in the dimer diol per 1.00 mol of carboxyl group contained in the dimer acid.

Example 1:

Two parts of hexamethylene diisocyanate ("TPA-100", trade name, produced by Asahi Kasei Chemicals Corporation) as the crosslinking agent and 20 parts of polymerized rosin ester ["Rikatack PCJ", trade name, produced by Rika Fine-Tech Inc., Tokushima] as the tackifier were blended with 100 parts of Polyester Resin C to prepare a pressure-sensitive adhesive.

This was coated on a paper substrate having a basis weight of 30 g/m$^2$ ("AC-30G", produced by Nippon Paper Papylia Co., Ltd.) to have a dry thickness of 40 $\mu$m and then dried at 100°C for 3 minutes.

After drying, the release-treated surface of a polyethylene terephthalate (PET) sheet subjected to a release treatment was attached together, and the laminate was aged at 50°C for 5 days to produce a polyester-based masking sheet having a crosslinked pressure-sensitive adhesive layer.

Example 2:

A polyester-based masking sheet was produced by preparing the pressure-sensitive adhesive in the same manner as in Example 1 except for changing the blending amount of the crosslinking agent to 4 parts per 100 parts of Polyester Resin C.

Example 3:

A polyester-based masking sheet was produced by preparing the pressure-sensitive adhesive in the same manner as in Example 1 except for changing the blending amount of the crosslinking agent to 10 parts per 100 parts of Polyester Resin C.

Example 4:

A polyester-based masking sheet was produced by preparing the pressure-sensitive adhesive in the same manner as in Example 2 except for using 100 parts of Polyester Resin B in place of 100 parts of Polyester Resin C.

Example 5:

A polyester-based masking sheet was produced by preparing the pressure-sensitive adhesive in the same manner as in Example 2 except for using 100 parts of Polyester Resin D in place of 100 parts of Polyester Resin C.

Example 6:

A polyester-based masking sheet was produced by preparing the pressure-sensitive adhesive in the same manner as in Example 2 except for changing the blending amount of the tackifier to 10 parts per 100 parts of Polyester Resin C.

Example 7:

A polyester-based masking sheet was produced by preparing the pressure-sensitive adhesive in the same manner as in Example 2 except for changing the blending amount of the tackifier to 40 parts per 100 parts of Polyester Resin C.

Comparative Example 1:

A polyester-based masking sheet was produced by preparing the pressure-sensitive adhesive in the same manner as in Example 2 except for not blending the tackifier.

Comparative Example 2:

A polyester-based masking sheet was produced by preparing the pressure-sensitive adhesive in the same manner as in Example 2 except for changing the blending amount of the tackifier to 60 parts per 100 parts of Polyester Resin C.

Comparative Example 3:

A polyester-based masking sheet was produced by preparing the pressure-sensitive adhesive in the same manner as in Example 2 except for using 100 parts of Polyester Resin A in place of 100 parts of Polyester Resin C.

Comparative Example 4:

A polyester-based masking sheet was produced by preparing the pressure-sensitive adhesive in the same manner as in Example 2 except for using 100 parts of Polyester Resin E in place of 100 parts of Polyester Resin C.

Comparative Example 5:

A polyester-based masking sheet was produced by preparing the pressure-sensitive adhesive in the same manner as in Example 1 except for changing the blending amount of the crosslinking agent to 1 part per 100 parts of Polyester Resin C. Comparative Example 6:
A polyester-based masking sheet was produced by preparing the pressure-sensitive adhesive in the same manner as in Example 1 except for changing the blending amount of the crosslinking agent to 15 parts per 100 parts of Polyester Resin C.
With respect to each of polyester-based masking sheets of Examples 1 to 7 and Comparative Examples 1 to 6, the gel fraction of pressure-sensitive adhesive layer, the pressure-sensitive adhesive force to SUS plate, the pressure-sensitive adhesive force to own back surface, the high-speed peeling test from own back surface, the constant-load peeling test from own back surface, and the high-temperature peeling test were measured by the following methods, and the results obtained are shown together in Tables 1 to 4 below. In each Table, the composition (kind of polyester resin, ratio of hydroxyl group/carboxyl group of raw material components, and parts of each of polyester resin, tackifier and crosslinking agent used) of the pressure-sensitive adhesive used is shown together.

<Gel Fraction of Pressure-Sensitive Adhesive Layer>

The same samples as those of Examples and Comparative Examples were produced as a measurement specimen without blending the tackifier, and each sheet having a thickness of 50 $\mu$m was cut into a square of 5 cm $\times$ 5 cm.
The sample cut out in this way was wrapped with a polytetrafluoroethylene (PTFE) sheet whose weight is known, and the weight was determined. The wrapped sample was left standing in toluene at 23°C for 7 days, and the sol portion in the sample was extracted and then dried at 130°C for 2 hours. The weight after drying was determined. The gel fraction was calculated by the following formula:

$$\text{Gel fraction (\%)} = [(\text{weight after drying - weight of PTEF sheet})/(\text{weight before drying - weight of PTFE sheet})] \times 100$$

<Pressure-sensitive Adhesive Force to SUS plate>

The pressure-sensitive adhesive layer surface of the polyester-based masking sheet (cut into a width of 20 mm) was adhered to an SUS304 plate by moving a 2-kg roller back and forth once thereon, and the 180° peel adhesive force (pressure-sensitive adhesive force) (N/20 mm) was measured by a tensile compression tester ("TG-1kN", manufactured by Minebea Co., Ltd.) (peeling speed: 300 mm/min, temperature: 23±2°C, humidity: 65±5% RH).

<Pressure-sensitive Adhesive Force to Own Back Surface>

The pressure-sensitive adhesive layer surface of the polyester-based masking sheet was attached together and fixed to an SUS304 plate, and to the substrate surface (own back surface) thereof, the pressure-sensitive adhesive layer surface of the same polyester-based masking sheet (cut into a width of 20 mm) was adhered by moving a 2-kg roller back and forth once thereon. After 30 minutes, the 180° peel adhesive force (pressure-sensitive adhesive force) (N/20 mm) was measured by a tensile compression tester ("TG-1kN", manufactured by Minebea Co., Ltd.) (peeling speed: 300 mm/min, temperature: 23±2°C, humidity: 65±5% RH).

<High-Speed Peeling Test from Own Back Surface>

The pressure-sensitive adhesive layer surface of the polyester-based masking sheet was attached together and fixed to an SUS304 plate, and to the substrate surface (own back surface) thereof, the pressure-sensitive adhesive layer surface of the same polyester-based masking sheet (cut into a width of 20 mm) was adhered by moving a 2-kg roller back and forth once thereon. After 30 minutes, the 180° peel adhesive force (pressure-sensitive adhesive force) (N/20 mm) was measured by a tensile compression tester ("TG-1kN", manufactured by Minebea Co., Ltd.) (peeling speed: 30 mm/min, temperature: 23±2°C, humidity: 65±5% RH).

<Constant-Load Peeling Test from Own Back Surface>

The pressure-sensitive adhesive layer surface of the polyester-based masking sheet was attached together and fixed to an SUS304 plate, and to the substrate surface (own back surface) thereof, the pressure-sensitive adhesive layer surface of the same polyester-based masking sheet (cut into a width of 20 mm and a length of 300 mm) was adhered by moving a 500-g roller back and forth once thereon. The laminate was left standing for 30 minutes and then, a weight of 30 g was hung at a right angle under the condition of 40°C. After 1 hour, the distance for which separation proceeded from the initial stage was measured. The length of the initially adhered portion is 200 mm.

<High-Temperature Peeling test>

The polyester-based masking sheet was cut into a width of 20 mm, and the pressure-sensitive adhesive layer surface thereof was attached together to an aluminum plate. After aging for 1 hour under the condition of 130°C, the sample was taken out and left standing to cool. By performing the separation with a hand, the presence or absence of leaving of adhesive residue, contamination and the like was observed. The sample was rated "A" when leaving of adhesive residue, contamination and the like were not observed, and rated "B" when leaving of adhesive residue, contamination or the like was observed.

Table 1

|  |  | Example 1 | Example 2 | Example 3 | Example 4 |
|---|---|---|---|---|---|
| Polyester Resin A | (parts) | - | - | - | - |
| Polyester Resin B | (parts) | - | - | - | 100 |
| Polyester Resin C | (parts) | 100 | 100 | 100 | - |
| Polyester Resin D | (parts) | - | - | - | - |
| Polyester Resin E | (parts) | - | - | - | - |

(continued)

|  | Example 1 | Example 2 | Example 3 | Example 4 |
|---|---|---|---|---|
| Molar ratio of raw material components of polyester resin (hydroxyl group/carboxyl group ratio) | 1.05 | 1.05 | 1.05 | 1.01 |
| Tackifier (parts)<br>Crosslinking agent (parts) | 20<br>2 | 20<br>4 | 20<br>10 | 20<br>4 |
| Gel fraction of pressure-sensitive adhesive layer (%) | 70 | 82 | 85 | 70 |
| Pressure-sensitive adhesive force to SUS plate (N/20 mm) | 6.7 | 4.8 | 4.2 | 6.5 |
| Pressure-sensitive adhesive force to own back surface (N/20 mm) | 6.2 | 4.0 | 3.4 | 6.2 |
| High-speed peeling test from own back surface (N/20 mm) | 6.5 | 5.3 | 4.2 | 6.3 |
| Constant-load peeling test from own back surface [slippage distance] (mm) | 48 | 1 | 25 | 54 |
| High-temperature peeling test | A | A | A | A |

Table 2

|  |  | Example 5 | Example 6 | Example 7 |
|---|---|---|---|---|
| Polyester Resin A | (parts) | - | - | - |
| Polyester Resin B | (parts) | - | - | - |
| Polyester Resin C | (parts) | - | 100 | 100 |
| Polyester Resin D | (parts) | 100 | - | - |
| Polyester Resin E | (parts) | - | - | - |
| Molar ratio of raw material components of polyester resin (hydroxyl group/ carboxyl group ratio) | | 1.20 | 1.05 | 1.05 |
| Tackifier (parts)<br>Crosslinking agent (parts) | | 20<br>4 | 10<br>4 | 40<br>4 |
| Gel fraction of pressure-sensitive adhesive layer(%)<br>Pressure-sensitive adhesive force to SUS plate (N/20 mm) | | 85<br>4.2 | 82<br>4.6 | 82<br>6.8 |
| Pressure-sensitive adhesive force to own back surface (N/20 mm) | | 3.5 | 3.0 | 4.8 |
| High-speed peeling test from own back surface (N/20 mm) | | 4.0 | 4.8 | 5.8 |
| Constant-load peeling test from own back surface [slippage distance](mm) | | 24 | 5 | 0 |
| High-temperature peeling test | | A | A | A |

Table 3

|  |  | Comparative Example 1 | Comparative Example 2 | Comparative Example 3 |
|---|---|---|---|---|
| Polyester Resin A | (parts) | - | - | 100 |
| Polyester Resin B | (parts) | - | - | - |
| Polyester Resin C | (parts) | 100 | 100 | - |
| Polyester Resin D | (parts) | - | - | - |
| Polyester Resin E | (parts) | - | - | - |
| Molar ratio of raw material components of polyester resin (hydroxyl group/carboxyl group ratio) | | 1.05 | 1.05 | 0.95 |

(continued)

|  | | Comparative Example 1 | Comparative Example 2 | Comparative Example 3 |
|---|---|---|---|---|
| Tackifier (parts) | | 0 | 60 | 20 |
| Crosslinking agent (parts) | | 4 | 4 | 4 |
| Gel fraction of pressure-sensitive adhesive layer (%) | | 82 | 82 | 35 |
| Pressure-sensitive adhesive force to SUS plate (N/20 mm) | | 2.9 | 8.4 | 12.5 |
| Pressure-sensitive adhesive force to own back surface (N/20 mm) | | 0.9 | 6.5 | 10.5 |
| High-speed peeling test from own back surface (N/20 mm) | | unmeasurable | 7.5 | 11.0 |
| Constant-load peeling test from own back surface [slippage distance](mm) | | fell off | 0 | fell off |
| High-temperature peeling test | | A | B | B |

Table 4

|  | | Comparative Example 4 | Comparative Example 5 | Comparative Example 6 |
|---|---|---|---|---|
| Polyester Resin A (parts) | | - | - | - |
| Polyester Resin B (parts) | | - | - | - |
| Polyester Resin C (parts) | | - | 100 | 100 |
| Polyester Resin D (parts) | | - | - | - |
| Polyester Resin E (parts) | | 100 | - | - |
| Molar ratio of raw material components of polyester resin (hydroxyl group/carboxyl group ratio) | | 1.45 | 1.05 | 0.95 |
| Tackifier (parts) | | 20 | 20 | 20 |
| Crosslinking agent (parts) | | 4 | 1 | 15 |
| Gel fraction of pressure-sensitive adhesive layer (%) | | 20 | 19 | 93 |
| Pressure-sensitive adhesive force to SUS plate (N/20 mm) | | unmeasurable | unmeasurable | 0.9 |
| Pressure-sensitive adhesive force to own back surface (N/20 mm) | | unmeasurable | unmeasurable | 0.5 |
| High-speed peeling test from own back surface (N/20 mm) | | unmeasurable | unmeasurable | 0.5 |
| Constant-load peeling test from own back surface [slippage distance](mm) | | unmeasurable | unmeasurable | unmeasurable |
| High-temperature peeling test | | unmeasurable | unmeasurable | A |

In Tables 3 and 4, the term "unmeasurable" indicates: in "Comparative Example 1", a state where an exact value cannot be obtained in the high-speed peeling test due to excessively low pressure-sensitive adhesive force to own back surface; in "Comparative Examples 4 and 5", a state where an exact value cannot obtained due to cohesive failure; and in "Comparative Example 6", a state where the sample is peeled from the adherend already at the time of attaching them together and cannot be measured.

As apparent from the results above, each of the polyester-based masking sheets of Examples 1 to 7 can reduce the load in unwinding of the tape at a high speed while maintaining the pressure-sensitive adhesive force to an adherend and the own back surface and moreover, can be re-peeled without leaving adhesive residue or causing contamination or the like at the high-temperature peeling test. On the other hand, each of the polyester-based masking sheets of Comparative Examples 1 to 6 is poor in any one of the above-described properties and cannot satisfy all properties.

In addition to those excellent properties, thanks to a plant-derived pressure-sensitive adhesive layer, each of the polyester-based masking sheets of Examples 1 to 7 is expected to reduce the increase of $CO_2$ in disposal and is endowed with properties as an earth-friendly biomass masking sheet.

INDUSTRIAL APPLICABILITY

According to the present invention, a pressure-sensitive adhesive layer in which a polyester resin using a plant-derived material as the raw material component is employed for the active ingredient and a tackifier is added thereto and which is crosslinked by a crosslinking agent to have a gel fraction in a specific range, is provided on a substrate, so that an earth-friendly polyester-based masking sheet unthreatened by depletion of fossil resources and thanks to use of a plant-derived material, capable of realizing carbon neutral, despite discharge of carbon dioxide at the disposal after use, can be provided.

**Claims**

1. A polyester-based masking sheet comprising:

   a substrate; and
   a pressure-sensitive adhesive layer provided on said substrate, which contains a polyester resin obtained by condensation-polymerizing a plant-derived dicarboxylic acid with a plant-derived diol in a ratio such that a content of hydroxyl group in the diol is from 1.01 to 1.40 mol per 1.00 mol of carboxyl group contained in the dicarboxylic acid, and a tackifier in an amount of from 10 to 50 parts by weight per 100 parts by weight of said polyester resin, and is crosslinked by a crosslinking agent to have a gel fraction of 40 to 90%, wherein the gel fraction is measured in accordance with the method as indicated in the description.
   wherein the plant-derived dicarboxylic acid is a dimer acid formed from a castor oil-derived oleic acid and the plant-derived diol is a dimer diol formed from a castor oil-derived aliphatic ester or oleic acid, and
   in the condensation-polymerization, a non-plant-derived diol is also used as a monomer component together with the plant-derived dicarboxylic acid and the plant-derived diol, and the non-plant-derived diol has a ratio of 5 wt% or less, based on the entire raw material component.

2. The polyester-based masking sheet according to claim 1, wherein the tackifier includes a plant-derived material as a main component thereof.

3. The polyester-based masking sheet according to claim 1 or 2, wherein the tackifier is at least one selected from a rosin-based resin and a terpene-based resin.

4. The polyester-based masking sheet according to any one of claims 1 to 3, wherein the crosslinking agent is a polyisocyanate compound.

5. The polyester-based masking sheet according to any one of claims 1 to 4, wherein the crosslinking agent is contained in an amount of from 2 to 13 parts by weight per 100 parts by weight of the polyester resin.

6. The polyester-based masking sheet according to any one of claims 1 to 5, wherein the substrate is a porous substrate.

**Patentansprüche**

1. Abdeckfolie auf Polyesterbasis, umfassend:

   ein Substrat und
   eine auf dem Substrat bereitgestellte druckempfindliche Haftschicht, die ein Polyesterharz, erhalten durch Kondensationspolymerisieren einer pflanzlichen Dicarbonsäure mit einem pflanzlichen Diol in einem solchen Verhältnis, dass ein Hydroxylgruppengehalt in dem Diol von 1,01 bis 1,40 Mol pro 1,00 Mol der in der Dicarbonsäure enthaltenen Carboxylgruppe beträgt, und einen Klebrigmacher in einer Menge von 10 bis 50 Gewichtsanteilen pro 100 Gewichtsanteilen des Polyesterharzes enthält und durch ein Vernetzungsmittel vernetzt wird, um eine Gelfraktion von 40 bis 90 % aufzuweisen, wobei die Gelfraktion in Übereinstimmung mit dem in der Beschreibung

**EP 2 280 048 B1**

angegebenen Verfahren gemessen wird, wobei es sich bei der pflanzlichen Dicarbonsäure um eine Dimersäure handelt, gebildet aus einer von Rizinusöl abgeleiteten Ölsäure, und es sich bei dem pflanzlichen Diol um einen Dimerdiol handelt, gebildet aus einem von Rizinusöl abgeleiteten aliphatischen Ester oder einer von Rizinusöl abgeleiteten Ölsäure, und in der Kondensationspolymerisation auch ein nicht pflanzlicher Diol als ein Monomerbestandteil zusammen mit der pflanzlichen Dicarbonsäure und dem pflanzlichen Diol verwendet wird, und der nicht pflanzliche Diol ein Verhältnis von 5 Gew.-% oder weniger auf Basis des gesamten Rohmaterialbestandteils aufweist.

2. Abdeckfolie auf Polyesterbasis gemäß Anspruch 1, wobei der Klebrigmacher ein pflanzliches Material als einen Hauptbestandteil davon einschließt.

3. Abdeckfolie auf Polyesterbasis gemäß Anspruch 1 oder 2, wobei es sich bei dem Klebrigmacher um mindestens einen handelt, ausgewählt aus einem Harz auf Kolophoniumbasis und einem Harz auf Terpenbasis.

4. Abdeckfolie auf Polyesterbasis gemäß einem der Ansprüche 1 bis 3, wobei es sich bei dem Vernetzungsmittel um eine Polyisocyanatverbindung handelt.

5. Abdeckfolie auf Polyesterbasis gemäß einem der Ansprüche 1 bis 4, wobei das Vernetzungsmittel in einer Menge von 2 bis 13 Gewichtsanteilen pro 100 Gewichtsanteilen des Polyesterharzes enthalten ist.

6. Abdeckfolie auf Polyesterbasis gemäß einem der Ansprüche 1 bis 5, wobei es sich bei dem Substrat um ein poröses Substrat handelt.

**Revendications**

1. Feuille de masquage à base de polyester comprenant :

   un substrat ; et
   une couche adhésive sensible à la pression fournie sur ledit substrat, qui contient une résine polyester obtenue par polymérisation par condensation d'un acide dicarboxylique dérivé de plante avec un diol dérivé de plante en un rapport tel qu'une teneur en groupe hydroxyle dans le diol est de 1,01 à 1,40 mole pour 1,00 mole de groupe carboxyle contenu dans l'acide dicarboxylique, et un agent tackifiant en une quantité de 10 à 50 parties en poids pour 100 parties en poids de ladite résine polyester, et est réticulée par un agent de réticulation pour avoir une fraction de gel de 40 à 90 %, dans laquelle la fraction de gel est mesurée selon la méthode indiquée dans la description,
   dans laquelle l'acide dicarboxylique dérivé de plante est un acide dimère formé à partir d'un acide oléique dérivé de l'huile de ricin et le diol dérivé de plante est un diol dimère formé à partir d'un ester aliphatique ou d'un acide oléique dérivé d'huile de ricin, et
   dans la polymérisation par condensation, un diol non dérivé de plante est également utilisé en tant que composant monomère conjointement avec l'acide dicarboxylique dérivé de plante et le diol dérivé de plante, et le diol non dérivé de plante a un rapport de 5 % en poids ou moins, sur la base du composant matière première entier.

2. Feuille de masquage à base de polyester selon la revendication 1, dans laquelle l'agent tackifiant inclut un matériau dérivé de plante en tant que composant principal de celui-ci.

3. Feuille de masquage à base de polyester selon la revendication 1 ou 2, dans laquelle l'agent tackifiant est au moins un sélectionné parmi une résine à base de rosine et une résine à base de terpène.

4. Feuille de masquage à base de polyester selon l'une quelconque des revendications 1 à 3, dans laquelle l'agent de réticulation est un composé polyisocyanate.

5. Feuille de masquage à base de polyester selon l'une quelconque des revendications 1 à 4, dans laquelle l'agent de réticulation est contenu en une quantité de 2 à 13 parties en poids pour 100 parties en poids de la résine polyester.

6. Feuille de masquage à base de polyester selon l'une quelconque des revendications 1 à 5, dans laquelle le substrat est un substrat poreux.

**EP 2 280 048 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10158596 A
- JP 2007320976 A
- JP 2008013593 A
- JP 2151427 A